# EUROPÄISCHE PATENTANMELDUNG

(11) **EP 4 667 167 A1**
(43) Veröffentlichungstag der Anmeldung: **24.12.2025**
(21) Anmeldenummer: 24182705.4
(22) Anmeldetag: 17.06.2024
(51) Int. Cl.: B25J 9/04, B25J 9/14, B25J 11/00, B25J 15/00, B25J 18/02, B25J 19/00, B23K 26/38

(54) **VORRICHTUNG ZUM AUTOMATISIERTEN BELADEN UND/ODER ENTLADEN VON WERKSTÜCKEN FÜR EINE LASERBEARBEITUNGSMASCHINE**

(71) Anmelder: Bystronic Laser AG, 3362 Niederönz (CH)
(72) Erfinder: Jacobi, Stefan Alfons, 59597 Bad Westernkotten (DE)
(74) Vertreter: Fink Numrich Patentanwälte PartmbB

(57) **Zusammenfassung**

Die Erfindung betrifft eine Vorrichtung zum automatisierten Beladen und/oder Entladen von Werkstücken für eine Laserbearbeitungsmaschine (2), insbesondere Laserschneidmaschine, umfassend ein Stützelement (5), das sich entlang einer ersten Achse (A1) erstreckt, welche in der Betriebsposition der Vorrichtung (1) vom Boden nach oben verläuft, sowie einen Kragarm (8), der sich ausgehend von dem Stützelement (8) entlang einer zweiten Achse (A2) nach außen erstreckt und um die erste Achse (A1) automatisiert drehbar ist. Im Bereich eines dem Stützelement (5) abgewandten äußeren Endes des Kragarms (8) ist eine Halteeinrichtung (12) zum Halten der Werkstücke vorgesehen, welche um eine dritte Achse (A3) automatisiert drehbar ist. In der Vorrichtung (1) sind Aktuatoren (14a, 14b, 14c, 14d) zur automatisierten Ausführung von Bewegungen der Vorrichtung (1) und eine Steuereinrichtung (15) zum Steuern der Aktuatoren (14a, 14b, 14c, 14d) vorgesehen. Die erfindungsgemäße Vorrichtung zeichnet sich dadurch aus, dass der Kragarm (8) mit dem Stützelement (5) über eine Dreheinrichtung (7) gekoppelt ist, wobei die Dreheinrichtung (7) ausgehend von einer Nullposition eine Drehung des Kragarms (8) relativ zum Stützelement (5) um die erste Achse (A1) von wenigstens bis zu 240° in jede Drehrichtung ermöglicht.

## Beschreibung

Die Erfindung betrifft eine Vorrichtung zum automatisierten Beladen und/oder Entladen von Werkstücken für eine Laserbearbeitungsmaschine, insbesondere Laserschneidmaschine. Mit anderen Worten betrifft die Erfindung eine Vorrichtung, mit der die Laserbearbeitungsmaschine automatisiert mit Werkstücken beladen werden kann und/oder mit der Werkstücke automatisiert aus der Laserbearbeitungsmaschine entladen werden können.

Aus dem Stand der Technik ist es bekannt, mittels einer automatisierten Vorrichtung Werkstücke einer Laserbearbeitungsmaschine zuzuführen bzw. von dieser zu entfernen. Hierfür kann die automatisierte Vorrichtung geeignete Bewegungen zum Transport der Werkstücke durchführen.

Die Druckschrift WO 2011/134524 A1 zeigt eine Vorrichtung zum Entladen von Werkstücken aus einer Laserschneidmaschine. Die Vorrichtung umfasst einen Kragarm, der drehbar an einem Stützelement befestigt ist. Der Winkelbereich der Drehung des Kragarms ist dabei beschränkt.

Aufgabe der Erfindung ist es, eine Vorrichtung zum automatisierten Beladen und/oder Entladen von Werkstücken für eine Laserbearbeitungsmaschine zu schaffen, deren Bewegungen einen großen räumlichen Bereich abdecken.

Diese Aufgabe wird durch die Vorrichtung gemäß Patentanspruch 1 gelöst. Weiterbildungen der Erfindung sind in den abhängigen Ansprüchen definiert.

Die erfindungsgemäße Vorrichtung dient zum automatisierten Beladen und/oder Entladen von Werkstücken für eine Laserbearbeitungsmaschine, wobei die Laserbearbeitungsmaschine vorzugsweise eine Laserschneidmaschine ist. Die Werkstücke sind vorzugsweise metallische Werkstücke und insbesondere Bleche. Die Vorrichtung umfasst ein Stützelement, das sich entlang einer ersten Achse erstreckt, welche in der Betriebsposition der Vorrichtung (d.h. in der Position der bestimmungsgemäßen Verwendung der Vorrichtung) vom Boden, auf dem die Vorrichtung aufgestellt ist, nach oben verläuft. Vorzugsweise liegt die erste Achse im Stützelement und vorzugsweise verläuft die erste Achse in vertikaler Richtung vom Boden nach oben. Die Vorrichtung umfasst ferner einen Kragarm, der sich ausgehend von dem Stützelement und insbesondere ausgehend von einem oberen Ende des Stützelements (d.h. dem Ende des Stützelements, das in der Betriebsposition das obere Ende ist) entlang einer zweiten Achse nach außen erstreckt und um die erste Achse automatisiert drehbar ist. Vorzugsweise verläuft die zweite Achse senkrecht zur ersten Achse.

In der erfindungsgemäßen Vorrichtung ist im Bereich eines dem Stützelement abgewandten äußeren Endes des Kragarms (d.h. des Endes des Kragarms, das entfernt von dem Stützelement ist) eine Halteeinrichtung zum Halten der Werkstücke vorgesehen, welche um eine dritte Achse automatisiert drehbar ist. Vorzugsweise erstreckt sich die dritte Achse parallel zur ersten Achse. Die Vorrichtung enthält ferner Aktuatoren zur automatisierten Ausführung von Bewegungen der Vorrichtung, wobei die Bewegungen die oben beschriebenen automatisierten Drehungen des Kragarms bzw. der Halteeinrichtung um die erste bzw. die dritte Achse umfassen und gegebenenfalls auch noch weitere von der Vorrichtung ausführbare Bewegungen betreffen können. Zur Steuerung der Aktuatoren ist eine Steuereinrichtung vorgesehen.

Die erfindungsgemäße Vorrichtung zeichnet sich dadurch aus, dass der Kragarm mit dem Stützelement und vorzugsweise mit dem oberen Ende des Stützelements über eine Dreheinrichtung gekoppelt ist, wobei die Dreheinrichtung ausgehend von einer Nullposition, welche die Neutralstellung mit 0° Drehwinkel ist, eine Drehung des Kragarms relativ zum Stützelement um die erste Achse von wenigstens bis zu 240° in jede Drehrichtung ermöglicht. Dies kann insbesondere dadurch erreicht werden, dass die Drehung des Kragarms nicht durch Bauteile der Vorrichtung und insbesondere nicht durch das Stützelement beschränkt ist.

Die Nullposition, d.h. die Position mit einem Drehwinkel von 0°, kann beliebig festgelegt sein. In einer bevorzugten Variante ist die Nullposition diejenige Position, in welcher der Kragarm im bestimmungsgemäßen Betrieb der Vorrichtung auf eine Auflage der Laserbearbeitungsmaschine weist, über welche der Austausch der Werkstücke zwischen der Vorrichtung und der Laserbearbeitungsmaschine erfolgt.

Die erfindungsgemäße Vorrichtung hat einen großen Bewegungsradius, so dass sie Werkstücke in einem großen räumlichen Bereich erreichen kann. Demzufolge kann die Vorrichtung sehr flexibel in unterschiedlichsten räumlichen Gegebenheiten genutzt werden.

In einer bevorzugten Ausführungsform ermöglicht die Dreheinrichtung ausgehend von der Nullposition die Drehung des Kragarms relativ zum Stützelement um die erste Achse von wenigstens bis zu 270° und vorzugsweise von wenigstens bis zu 360° in jede Drehrichtung. Hierdurch können Werkstücke, welche durch die Vorrichtung gehandhabt werden, im Wesentlichen um die gesamte Vorrichtung herum angeordnet werden.

In einer weiteren bevorzugten Ausführungsform beinhaltet die Drehrichtung einen Drehkranz. Drehkränze sind an sich aus dem Stand der Technik bekannt und werden beispielsweise im Bereich der Baggertechnik verwendet. Ein Drehkranz umfasst einen Innenring und einen Außenring, wobei der Außenring über einen Antrieb gegenüber dem Innenring drehbar ist. In der Regel ist der Antrieb über ein Schneckenrad oder Zahnrad mit einer Außenverzahnung des Außenrings gekoppelt. Mit einem Drehkranz als Dreheinrichtung kann auf einfache Weise ein großer Drehwinkelbereich realisiert werden. Darüber hinaus können Leitungen, wie z.B. elektrische Leitungen, Druckluftleitungen oder Hydraulikleitungen, auf einfache Weise durch den Drehkranz geführt werden.

In einer weiteren bevorzugten Variante der erfindungsgemäßen Vorrichtung ist die Halteeinrichtung am Kragarm mittels einer weiteren Dreheinrichtung gekoppelt, wobei die Dreheinrichtung ausgehend von einer Nullposition, welche die Neutralstellung mit 0° Drehwinkel ist, eine Drehung der Halteeinrichtung relativ zum Kragarm um die dritte Achse von wenigstens bis zu 240°, vorzugsweise von wenigstens bis zu 270° und besonders bevorzugt von wenigstens bis zu 360°, in jede Drehrichtung ermöglicht. Die Nullposition der Halteeinrichtung kann beliebig festgelegt sein. Vorzugsweise befindet sich im Betrieb der Vorrichtung die Halteeinrichtung in der Nullposition, wenn die Abgabe bzw. Aufnahme eines Werkstücks an der Laserbearbeitungsmaschine erfolgt.

Analog zu der oben beschriebenen Dreheinrichtung, welche die Drehung des Kragarms relativ zum Stützelement ermöglicht, beinhaltet in einer bevorzugten Ausführungsform auch die weitere Dreheinrichtung, welche die Halteeinrichtung am Kragarm koppelt, einen Drehkranz.

In einer weiteren, besonders bevorzugten Variante der erfindungsgemäßen Vorrichtung ist der Kragarm zum automatisierten Ein- und Ausfahren entlang der zweiten Achse, insbesondere als Teleskoparm, ausgebildet. Hierdurch wird der Bewegung der Vorrichtung ein translatorischer Freiheitsgrad hinzugefügt. Vorzugsweise ist ein hydraulischer Aktuator, insbesondere ein Hydraulikzylinder, zum Ein- und Ausfahren des Kragarms vorgesehen.

In einer weiteren bevorzugten Variante der erfindungsgemäßen Vorrichtung ist am Kragarm eine Hubeinrichtung zum Verschieben der Halteeinrichtung relativ zum Kragarm entlang der dritten Achse vorgesehen. Hierdurch wird der Bewegung der Vorrichtung ein weiterer Freiheitsgrad hinzugefügt. Die Hubeinrichtung weist vorzugsweise einen hydraulischen Aktuator auf.

Die Aktuatoren zur automatisierten Ausführung von Bewegungen der Vorrichtung können beliebig ausgestaltet sein. Vorzugsweise beinhalten die Aktuatoren der Vorrichtung einen oder mehrere hydraulische Aktuatoren, mit denen auch Werkstücke mit hohem Gewicht durch die Vorrichtung gehandhabt werden können.

In einer besonders bevorzugten Ausführungsform weist die Dreheinrichtung einen hydraulischen Antrieb, vorzugsweise einen Hydraulikmotor, für die Drehung des Kragarms um die erste Ache auf, und die weitere Dreheinrichtung weist einen weiteren hydraulischen Antrieb, insbesondere einen Hydraulikmotor, für die Drehung der Halteeinrichtung um die dritte Achse auf. Anstatt eines hydraulischen Antriebs kann gegebenenfalls auch ein elektromotorischer Antrieb für die Dreheinrichtung und/oder die weitere Dreheinrichtung verwendet werden.

In einer weiteren bevorzugten Ausführungsform sind zumindest ein Teil der Aktuatoren und insbesondere alle Aktuatoren voneinander unabhängig über die Steuereinrichtung gesteuert sind, wobei vorzugsweise zumindest die Aktuatoren für die Dreheinrichtung und die weitere Dreheinrichtung voneinander unabhängig über die Steuereinrichtung gesteuert sind. Die Bewegungen der Vorrichtung können somit entkoppelt voneinander ausgeführt werden, wodurch ein sehr flexibler Bewegungsablauf der Vorrichtung ermöglicht wird.

In einer weiteren Ausführungsform weist das Stützelement einen Hohlkörper auf, der sich entlang der ersten Achse erstreckt. Der Hohlkörper ist vorzugsweise konisch geformt, wobei er sich hin zum Kragarm verjüngt. Durch diese Formgebung wird eine sehr gute Krafteinleitung in das Stützelement über den Drehkranz sichergestellt.

In einer weiteren bevorzugten Variante erstrecken sich von dem Kragarm Leitungen durch eine Öffnung der Dreheinrichtung in den Hohlkörper, wobei es sich bei den Leitungen beispielsweise um elektrische Leitungen, pneumatische Leitungen und gegebenenfalls auch hydraulische Leitungen handeln kann. Mit dieser Variante kann eine Anbindung von Leitungen an externe Einrichtungen außerhalb der Vorrichtung über den Hohlkörper des Stützelements erfolgen. Die Leitungen können bei der Drehung des Kragarms relativ zum Stützelement verdrillt werden, so dass die oben beschriebenen Winkelbereiche der Drehung gewährleistet sind.

In einer weiteren bevorzugten Ausgestaltung ist im Bereich des Endes des Kragarms, das benachbart zum Stützelement ist, ein Gegengewicht vorgesehen, das gemeinsam mit dem Kragarm um die erste Achse drehbar ist. Hierdurch wird eine symmetrische Verteilung des Gewichts an der Dreheinrichtung sichergestellt. In einer bevorzugten Variante enthält das Gegengewicht die Steuereinrichtung, wodurch eine kompakte Unterbringung der Steuereinrichtung in der Vorrichtung ermöglicht wird.

Je nach Ausgestaltung kann die Halteeinrichtung zum Halten der Werkstücke eine pneumatisch betätigte Saugeinrichtung und/oder ein mechanisches Haltemittel umfassen. Üblicherweise wird eine pneumatisch betätigte Saugeinrichtung zum Halten der Werkstücke im Rahmen eines Beladens der Laserbearbeitungsmaschine genutzt, wohingegen ein mechanisches Haltemittel zum Halten der Werkstücke beim Entladen der Laserbearbeitungsmaschine verwendet wird. Die pneumatisch betätigte Saugeinrichtung kann beispielsweise eine Vielzahl von Saugnäpfen zum Halten des entsprechenden Werkstücks über Unterdruck umfassen. Ferner kann die Saugeinrichtung auch derart ausgestaltet sein, dass die Haltekraft über einen Luftstrom (Venturi-Prinzip) erzeugt wird. Das mechanische Haltemittel kann beispielsweise eine oder mehrere verfahrbare Gabeln umfassen, auf denen das Werkstück beim Transport mit seiner Unterseite aufliegt.

Neben der oben beschriebenen Vorrichtung betrifft die Erfindung ein Laserbearbeitungssystem, welches eine Laserbearbeitungsmaschine und die erfindungsgemäße Vorrichtung bzw. eine bevorzugte Variante der erfindungsgemäßen Vorrichtung umfasst. Die Vorrichtung dient dabei zum Beladen der Laserbearbeitungsmaschine mit Werkstücken und/oder zum Entladen von Werkstücken aus der Laserbearbeitungsmaschine.

Ausführungsbeispiele der Erfindung werden nachfolgend anhand der beigefügten Figuren detailliert beschrieben.

Es zeigen:
- Fig. 1: eine perspektivische Ansicht einer Ausführungsform einer erfindungsgemäßen Vorrichtung, welche zum Beladen und Entladen von Werkstücken an einer Laserbearbeitungsmaschine angeordnet ist, und
- Fig. 2: eine Draufsicht von oben auf die Anordnung der Fig. 1.

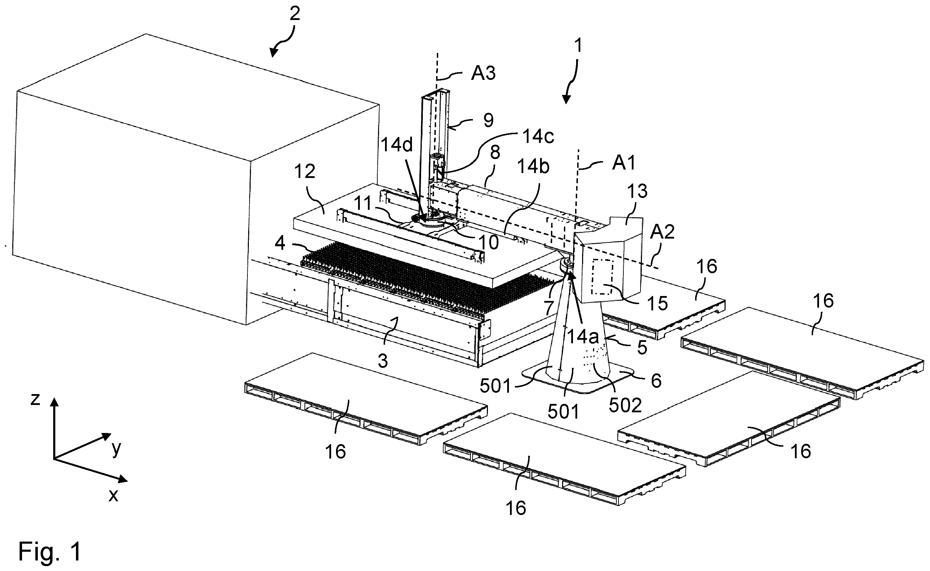

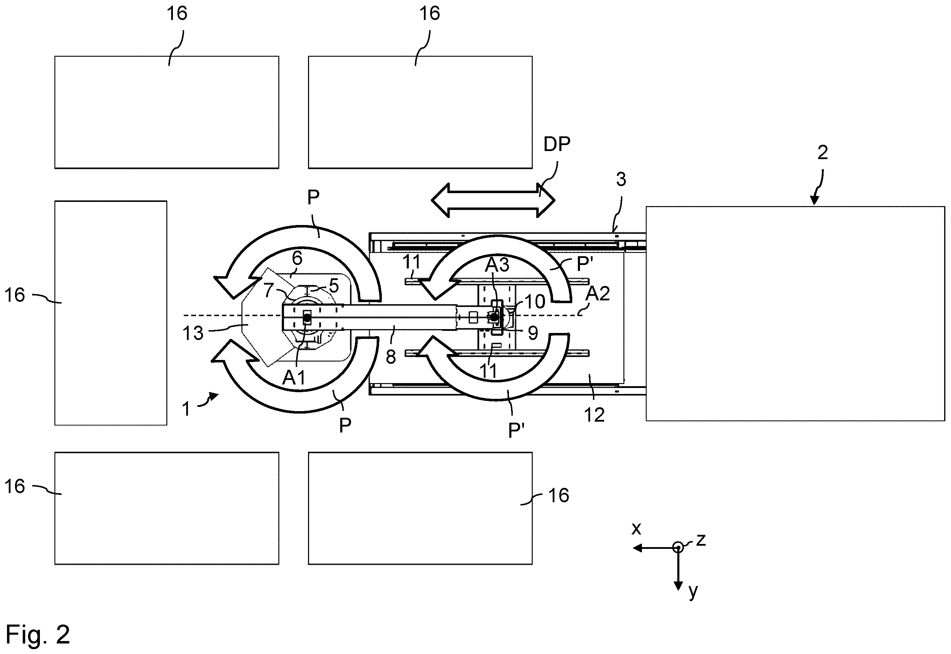

Fig. 1 zeigt in perspektivischer Darstellung eine Variante einer erfindungsgemäßen Vorrichtung zum Beladen und Entladen von Werkstücken für eine Laserbearbeitungsmaschine. Die Vorrichtung ist mit Bezugszeichen 1 und die Laserbearbeitungsmaschine mit Bezugszeichen 2 bezeichnet. In der hier beschriebenen Ausführungsform ist die Laserbearbeitungsmaschine 2 eine Laserschneidmaschine. In Fig. 1 und auch in der weiteren Fig. 2 ist ein Koordinatensystem zur Verdeutlichung der Raumrichtungen wiedergegeben. Die x-Achse des Koordinatensystems entspricht der Richtung, in welcher Werkstücke aus einem Innenraum der Laserbearbeitungsmaschine 2 heraustransportiert werden. Diese Richtung ist die Längsrichtung der Laserbearbeitungsmaschine 2. Die y-Achse entspricht der Querrichtung der Laserbearbeitungsmaschine 2 und die z-Achse entspricht der vertikalen Richtung bzw. Höhenrichtung.

Die Laserbearbeitungsmaschine 2 umfasst einen Wechseltisch 3 mit einer verfahrbaren Auflage 4. Über den Wechseltisch 3 werden Werkstücke in der Form von metallischen Blechen zum Laserschneiden in den Innenraum der Laserbearbeitungsmaschine 2 bewegt und nach dem Laserschneiden wieder aus dem Innenraum herausbewegt. Die Auflage 4 des Wechseltischs 3 umfasst eine Vielzahl von Latten mit Zwischenräumen, die sich in die y-Richtung erstrecken. Durch die Zwischenräume zwischen den Latten wird ein Eingriff von Haltegabeln zur Aufnahme von Werkstücken von der Auflage 4 ermöglicht, wie weiter unten näher beschrieben wird.

Die Vorrichtung 1 umfasst ein Stützelement 5, das über eine Bodenplatte 6 am Boden befestigt ist. Hierzu können beispielsweise Ankerstangen im Boden vorgesehen sein, über welche die Bodenplatte 6 am Boden angeschraubt wird. Oberhalb der Bodenplatte 6 befindet sich das Stützelement 5, das sich entlang einer vertikalen ersten Achse A1 nach oben erstreckt. Das Stützelement 5 umfasst zwei konische Halbschalen 501, welche sich in Richtung nach oben verjüngen. Die Halbschalen 501 bestehen vorzugsweise aus Stahl mit einer Dicke von beispielsweise 6 mm. Am oberen Ende des Stützelements 5 befindet sich eine Flanschplatte, an der eine Dreheinrichtung 7 in der Form eines Drehkranzes vorgesehen ist. In an sich bekannter Weise umfasst der Drehkranz einen Außenring mit einer Außenverzahnung, der gegenüber einem Innenring drehbar ist. Zur Drehung des Außenrings wird ein hydraulischer Aktuator 14a in der Form eines hydraulischen Antriebs (nicht im Detail dargestellt) verwendet, der vorzugsweise über ein Schneckengetriebe die Drehung des Außenrings bewirkt.

Die Dreheinrichtung 7 hat eine Öffnung, über welche in der hier beschriebenen Ausführungsform elektrische Kabel und Druckluftleitungen hin zu einem Lochmuster 502 im unteren Bereich des Stützelements 5 geführt werden. Am Lochmuster sind geeignete Anschlüsse angebracht (nicht gezeigt). Über diese Anschlüsse sind die elektrischen Leitungen bzw. die Druckluftleitungen mit externen Vorrichtungen (Stromversorgung bzw. Druckluftquelle) verbunden.

Auf der Oberseite der Dreheinrichtung 7 ist ein Kragarm 8 befestigt, der sich entlang einer horizontalen zweiten Achse A2 erstreckt und mittels der Dreheinrichtung 7 um die erste Achse A1 drehbar ist. Am Ende des Kragarms 8, das benachbart zu der Dreheinrichtung 7 liegt, ist ein Gegengewicht 13 angebracht, um eine symmetrische Gewichtsverteilung am Stützelement 5 sicherzustellen. Durch die konische Form des Stützelements 5 wird eine flächige Krafteinleitung hin zum Boden sichergestellt. Das Gegengewicht 13 enthält eine Steuereinrichtung 15, welche lediglich schematisch als strichpunktiertes Rechteck wiedergegeben ist. Mit anderen Worten umfasst das Gegenstück 13 ein Gehäuse, in dem die Steuereinrichtung 15 angeordnet ist. Mit der Steuereinrichtung 15 werden die weiter unten beschriebenen automatisierten Bewegungen der Vorrichtung 1 gesteuert.

Der Kragarm 8 ist entlang der zweiten Achse A2 teleskopisch ein- und ausfahrbar. Hierfür wird ein hydraulischer Aktuator 14b in der Form eines Hydraulikzylinders verwendet. Die Länge des Kragarms im nicht ausgefahrenen Zustand liegt beispielsweise bei zwei Metern, wobei der Kragarm vorzugsweise bis zu 800 mm oder gegebenenfalls auch 1000 mm ausgefahren werden kann. Am Ende des Kragarms 8, das entfernt von dem Stützelement 5 liegt, befindet sich eine Hubeinrichtung 9, die ein C-förmiges Profils umfasst, das entlang einer dritten vertikalen Achse A3 verfahrbar ist. Die Hubeinrichtung umfasst zum Verfahren des C-förmigen Profils einen hydraulischen Aktuator 14c, der lediglich schematisch angedeutet ist. Am unteren Ende des Profils befindet sich eine weitere Dreheinrichtung 10, die analog zur Dreheinrichtung 7 als Drehkranz ausgestaltet ist und einen hydraulischen Aktuator 14d in der Form eines hydraulischen Antriebs (nicht im Detail dargestellt) beinhaltet.

An der Unterseite der Dreheinrichtung 10 ist ein H-förmiger Träger 11 befestigt, der sich mittels der Dreheinrichtung 10 um die Achse A3 drehen kann. Mit dem H-förmigen Träger 11 ist eine Halteeinrichtung 12 zum Halten entsprechender Werkstücke beim Be- bzw. Entladen verbunden. Die Halteeinrichtung 12 ist an dem H-förmigen Träger 11 lösbar angebracht, so dass sie gegebenenfalls durch eine andere Halteeinrichtung getauscht werden kann. Die Halteeinrichtung 12 ist als Saugerrahmen ausgestaltet, der auf der Unterseite eine Vielzahl von Saugnäpfen (nicht dargestellt) aufweist. Mit einer Vakuumpumpe (nicht gezeigt) kann Unterdruck erzeugt werden, mit dem ein Werkstück auf der Unterseite des Saugerrahmens über die Saugnäpfe gehalten wird. Zum schnellen Lösen des Werkstücks kann Druckluft verwendet werden, die über die oben beschriebenen Druckluftleitungen zugeführt wird. Die Druckluftleitungen erstrecken durch eine Öffnung der Dreheinrichtung 10 in den Kragarm 8 und von dort über eine Öffnung in der Dreheinrichtung 7 hin zu einem Anschluss am Stützelement 5.

Über den Saugerrahmen werden die Werkstücke im Rahmen der Beladung der Laserbearbeitungsmaschine 2 gehalten. Zusätzlich ist am Saugerrahmen ein mechanisches Haltemittel in der Form einer Doppelgabel aus zwei gegenüberliegenden ein- und ausfahrbaren Haltegabeln vorgesehen. Dieses mechanische Haltemittel, das in Fig. 1 aus Übersichtlichkeitsgründen nicht dargestellt ist, dient zum Halten von bearbeiteten Werkstücken. Zur Entfernung eines bearbeiteten Werkstücks fahren die Haltegabeln der Doppelgabel in die oben erwähnten Zwischenräume der Auflage 4 ein, so dass das bearbeitete Werkstück, das sich auf der Auflage 4 befindet, bei der Bewegung der Halteeinrichtung 12 nach oben von der Auflage 4 entfernt wird.

Die Aktuatoren 14a bis 14d der Vorrichtung 1 werden über die Steuereinrichtung 15 gesteuert. Über den Aktuator 14a wird die Drehung des Kragarms 8 um die erste Achse A1, über den Aktuator 14b das Einfahren und Ausfahren des Kragarms 8 entlang der zweiten Achse A2, über den Aktuator 14c die Verschiebung der Halteeinrichtung 12 entlang der dritten Achse A3 und über den Aktuator 14d die Drehung der Halteeinrichtung 12 um die dritte Achse A3 bewirkt. Die genannten Bewegungen können mittels der Aktuatoren 14a bis 14d unabhängig voneinander ausgeführt werden, wodurch sehr flexibel unterschiedliche Bewegungsabläufe über eine entsprechende Ansteuerung mittels der Steuereinrichtung 15 umgesetzt werden können.

Um die Vorrichtung 1 sind mehrere Paletten 16 angeordnet. Im Betrieb der Vorrichtung 1 befinden sich auf einem Teil dieser Paletten die Werkstücke, die mittels der Laserbearbeitungsmaschine 2 zu bearbeiten sind. Darüber hinaus sind andere Paletten zur Ablage von Werkstücken nach deren Bearbeitung vorgesehen. Anstatt oder zusätzlich zu den Paletten 16 kann zur Bereitstellung von zu bearbeitenden Werkstücken bzw. zur Ablage von bearbeiteten Werkstücken auch ein geeignetes Materiallager bzw. ein Materialwagen genutzt werden.

Zum Beladen der Laserbearbeitungsmaschine 1 mit einem Werkstück bzw. metallischem Blech wird die Halteeinrichtung 12 über eine entsprechende Bewegung der Vorrichtung 1 hin zu einer Palette 16 gefahren, auf der sich ein zu bearbeitendes Werkstück befindet. Dabei wird die Halteeinrichtung 12 oberhalb des Werkstücks angeordnet. Anschließend wird das Werkstück über die Saugnäpfe der Halteeinrichtung 12 angesaugt und hierdurch an der Halteeinrichtung 12 gehalten. Die Halteeinrichtung 12 mit dem daran gehaltenen Werkstück wird dann durch eine entsprechende Bewegung der Vorrichtung 1 über der Auflage 4 des Wechselrahmens 3 positioniert. Anschließend wird ein Lösen des Werkstücks von der Halteeinrichtung 12 bewirkt, so dass das Werkstück auf der Auflage 4 des Wechselrahmens 3 aufliegt.

Das Werkstück wird dann durch Verfahren der Auflage 4 in den Innenraum der Laserbearbeitungsmaschine 2 bewegt und dort geeignet geschnitten. Nach Beendigung des Schneidvorgangs wird die Auflage 4 mit den geschnittenen Werkstückteilen wieder aus dem Innenraum der Laserbearbeitungsmaschine 2 herausbewegt. Über die oben beschriebene Doppelgabel können die bearbeiteten Werkstückteile dann durch die Halteeinrichtung 12 aufgenommen werden und anschließend über eine entsprechende Bewegung der Vorrichtung 1 auf einer zur Ablage vorgesehenen Palette 16 positioniert werden.

Die Vorrichtung 1 der Fig. 1 zeichnet sich dadurch aus, dass der Kragarm 8 und die Halteeinrichtung 12 einen großen Drehbereich aufweisen und der Kragarm 8 aus- und einfahrbar ist. Dies ist nochmals in der Draufsicht der Fig. 2 verdeutlicht. In dieser Figur sind die einzelnen Bewegungsrichtungen um bzw. entlang der Achsen A1, A2 und A3 angedeutet. Die Dreheinrichtung 7 ermöglicht es, dass der Kragarm 8 um die erste Achse A1 sowohl im und als auch gegen den Uhrzeigersinn um mindestens 240° und vorzugsweise um bis zu 360° rotiert werden kann, was durch die beiden Pfeile P angedeutet ist. In gleicher Weise ermöglicht die Dreheinrichtung 10, dass die Halteeinrichtung 12 um die dritte Achse A3 sowohl im als auch gegen den Uhrzeigersinn um einen Winkel von mindestens 240° und vorzugsweise um bis zu 360° rotiert werden kann, was durch entsprechende Pfeile P' angedeutet ist. Darüber hinaus wird durch den ein- und ausfahrbaren Kragarm 8 eine translatorische Bewegung entlang der Achse A2 im Bereich von in etwa 1000 mm erreicht, wie durch den Doppelpfeil DP angedeutet ist.

Die im Vorangegangenen beschriebenen Ausführungsformen der Erfindung weisen eine Reihe von Vorteilen auf. Insbesondere wird eine Vorrichtung 1 zum Be- und Entladen von Werkstücken für eine Laserbearbeitungsmaschine 2 geschaffen, die sich sehr flexibel innerhalb eines großen Raumbereichs bewegen kann. Im Besonderen wird dabei eine Drehung des Kragarms 8 innerhalb eines großen Winkelbereichs ermöglicht, so dass Werkstücke an unterschiedlichsten Positionen im Umfeld der Vorrichtung 1 aufgenommen bzw. abgelegt werden können.

### Bezugszeichenliste

- 1: Vorrichtung zum automatisierten Beladen und/oder Entladen von Werkstücken
- 2: Laserbearbeitungsmaschine
- 3: Wechseltisch
- 4: Auflage
- 5: Stützelement
- 501: Halbschalen des Stützelements
- 502: Lochmuster
- 6: Bodenplatte
- 7: Dreheinrichtung (Drehkranz)
- 8: Kragarm
- 9: Hubeinrichtung
- 10: weitere Dreheinrichtung (Drehkranz)
- 11: Träger
- 12: Halteeinrichtung
- 13: Gegengewicht
- 14a: Aktuator für die Dreheinrichtung
- 14b: Aktuator für den Kragarm
- 14c: Aktuator für die Hubeinrichtung
- 14d: Aktuator für die weitere Dreheinrichtung
- 15: Steuereinrichtung
- 16: Paletten
- A1: erste Achse
- A2: zweite Achse
- A3: dritte Achse
- P, P': Pfeile zur Andeutung von Drehungen um die erste Achse bzw. die dritte Achse
- DP: Doppelpfeil zur Andeutung des Einfahrens und Ausfahrens des Kragarms entlang der zweiten Achse

## Patentansprüche

1. Vorrichtung (1) zum automatisierten Beladen und/oder Entladen von Werkstücken für eine Laserbearbeitungsmaschine (2), insbesondere Laserschneidmaschine, umfassend ein Stützelement (5), das sich entlang einer ersten Achse (A1) erstreckt, welche in der Betriebsposition der Vorrichtung (1) vom Boden nach oben verläuft, sowie einen Kragarm (8), der sich ausgehend von dem Stützelement (8) entlang einer zweite Achse (A2) nach außen erstreckt und um die erste Achse (A1) automatisiert drehbar ist, wobei im Bereich eines dem Stützelement (5) abgewandten äußeren Endes des Kragarms (8) eine Halteeinrichtung (12) zum Halten der Werkstücke vorgesehen ist, welche um eine dritte Achse (A3) automatisiert drehbar ist, wobei Aktuatoren (14a, 14b, 14c, 14d) zur automatisierten Ausführung von Bewegungen der Vorrichtung (1) und eine Steuereinrichtung (15) zum Steuern der Aktuatoren (14a, 14b, 14c, 14d) vorgesehen sind,
**dadurch gekennzeichnet, dass**
der Kragarm (8) mit dem Stützelement (5) über eine Dreheinrichtung (7) gekoppelt ist, wobei die Dreheinrichtung (7) ausgehend von einer Nullposition eine Drehung des Kragarms (8) relativ zum Stützelement (5) um die erste Achse (A1) von wenigstens bis zu 240° in jede Drehrichtung ermöglicht.

2. Vorrichtung nach Anspruch 1, **dadurch gekennzeichnet, dass** die Dreheinrichtung (7) ausgehend von der Nullposition die Drehung des Kragarms (8) relativ zum Stützelement (5) um die erste Achse (A1) von wenigstens bis zu 270° und vorzugsweise von wenigstens bis zu 360° in jede Drehrichtung ermöglicht.

3. Vorrichtung nach Anspruch 1 oder 2, **dadurch gekennzeichnet, dass** die Dreheinrichtung (7) einen Drehkranz beinhaltet.

4. Vorrichtung nach einem der vorhergehenden Ansprüche, **dadurch gekennzeichnet, dass** die Halteeinrichtung (12) am Kragarm (8) mittels einer weiteren Dreheinrichtung (10) gekoppelt ist, wobei die Dreheinrichtung (10) ausgehend von einer Nullposition eine Drehung der Halteeinrichtung (12) relativ zum Kragarm (8) um die dritte Achse (A3) von wenigstens bis zu 240°, vorzugsweise von wenigstens bis zu 270° und besonders bevorzugt von wenigstens bis zu 360°, in jede Drehrichtung ermöglicht.

5. Vorrichtung nach einem der vorhergehenden Ansprüche, **dadurch gekennzeichnet, dass** die weitere Dreheinrichtung (10) einen Drehkranz beinhaltet.

6. Vorrichtung nach einem der vorhergehenden Ansprüche, **dadurch gekennzeichnet, dass** der Kragarm (8) zum automatisierten Ein- und Ausfahren entlang der zweiten Achse (A2), insbesondere als Teleskoparm, ausgebildet ist.

7. Vorrichtung nach einem der vorhergehenden Ansprüche, **dadurch gekennzeichnet, dass** am Kragarm (8) eine Hubeinrichtung (9) zum Verschieben der Halteeinrichtung (12) relativ zum Kragarm (8) entlang der dritten Achse (A) vorgesehen ist.

8. Vorrichtung nach einem der vorhergehenden Ansprüche, **dadurch gekennzeichnet, dass** die Aktuatoren (14a, 14b, 14, 14d) der Vorrichtung (1) einen oder mehrere hydraulische Aktuatoren beinhalten.

9. Vorrichtung nach Anspruch 8, **dadurch gekennzeichnet, dass** die Dreheinrichtung (7) einen hydraulischen Antrieb, vorzugsweise einen Hydraulikmotor, für die Drehung des Kragarms (8) um die erste Ache (A1) aufweist und die weitere Dreheinrichtung (10) einen weiteren hydraulischen Antrieb, insbesondere einen Hydraulikmotor, für die Drehung der Halteeinrichtung (12) um die dritte Achse (A3) aufweist.

10. Vorrichtung nach einem der vorhergehenden Ansprüche, **dadurch gekennzeichnet, dass** zumindest ein Teil der Aktuatoren (14a, 14b, 14c, 14d) und insbesondere alle Aktuatoren (14a, 14b, 14c, 14d) voneinander unabhängig über die Steuereinrichtung (15) gesteuert sind, wobei vorzugsweise zumindest die Aktuatoren (14a, 14b, 14c, 14d) für die Dreheinrichtung (7) und die weitere Dreheinrichtung (8) unabhängig über die Steuereinrichtung (15) gesteuert sind.

11. Vorrichtung nach einem der vorhergehenden Ansprüche, dass das Stützelement (5) einen Hohlkörper aufweist, der sich entlang der ersten Achse (A1) erstreckt, wobei der Hohlkörper vorzugsweise konisch geformt ist und sich hin zum Kragarm (8) verjüngt.

12. Vorrichtung nach einem der vorhergehenden Ansprüche, **dadurch gekennzeichnet, dass** sich von dem Kragarm (8) Leitungen durch eine Öffnung der Dreheinrichtung (7) in den Hohlkörper erstrecken.

13. Vorrichtung nach einem der vorhergehenden Ansprüche, **dadurch gekennzeichnet, dass** im Bereich des Endes des Kragarms (8), das benachbart zum Stützelement (5) ist, ein Gegengewicht (13) vorgesehen ist, das gemeinsam mit dem Kragarm (8) um die erste Achse (A1) drehbar ist.

14. Vorrichtung nach Anspruch 13, **dadurch gekennzeichnet, dass** das Gegengewicht (13) die Steuereinrichtung (15) enthält.

15. Laserbearbeitungssystem, **gekennzeichnet durch** eine Laserbearbeitungsmaschine (2) und eine Vorrichtung nach einem der vorhergehenden Ansprüche zum Beladen der Laserbearbeitungsmaschine (2) mit Werkstücken und/oder zum Entladen von Werkstücken aus der Laserbearbeitungsmaschine (2).
